# DEMANDE DE BREVET EUROPEEN

(11) **EP 2 818 744 A1**
(43) Date de publication de la demande: **31.12.2014**
(21) Numéro de dépôt: 14173588.6
(22) Date de dépôt: 24.06.2014
(51) Int. Cl.: F16C 43/06, F16C 19/36, F16C 33/64

(54) **Système de bouchage pour bague de roulement**

(30) Priorité: 24.06.2013 FR 1355995
(71) Demandeur: NTN-SNR Roulements, 74000 Annecy (FR)
(72) Inventeur: Ehinger, Pierre, 74210 FAVERGES (FR)
(74) Mandataire: Derambure Conseil

(57) **Abrégé**

Système de bouchage pour une bague de roulement comprenant :
- un dispositif bouchant (12) montable pour s'étendre dans un trou traversant (8) de révolution, et comprenant une extrémité de pied (15) une extrémité de tête (14) et une surface latérale (16),
une surface de roulement (42) de l'extrémité de pied (15) du dispositif bouchant (12) étant, lorsque le dispositif bouchant (12) s'étend dans une position prédéterminée, disposée continue avec la surface de roulement (7a) du corps principal (2') et formant avec elle un chemin de roulement pour les corps roulants (5) du roulement,
- un système de fixation (13) du dispositif bouchant (12) sur le corps principal (2').
Le système de fixation (13) comporte également un organe de maintien en profondeur (27) sollicitant l'extrémité de tête (14) du dispositif bouchant (12) radialement par rapport à l'axe transversal (Y), pour le placer en contact serré avec la surface périphérique (41) du trou traversant (8) au niveau de l'extrémité de tête (14).

## Description

L'invention concerne, de façon générale, le domaine technique des bagues de roulement.

Plus précisément, l'invention concerne le domaine du remplissage des corps roulants d'unités de roulement, encore appelées ci-après roulements, comprenant deux bagues concentriques.

Il est connu de l'art antérieur différentes solutions visant à remplir une rangée de corps roulants par l'intermédiaire d'une découpe prévue sur une bague.

Notamment, la publication DE102008011060 se rapporte à un roulement comportant une bague intérieure et une bague extérieure. La bague intérieure comprend une découpe. Cette découpe permet le remplissage de corps roulants dans un espace annulaire situé entre les bagues intérieure et extérieure. Un organe de recouvrement est adapté pour venir en recouvrement de la découpe. L'organe de recouvrement est fixé au corps principal de la bague selon un axe parallèle à l'axe du roulement.

Une telle réalisation permet le remplissage d'une rangée de corps roulants dans un roulement comprenant une bague intérieure et une bague extérieure.

En variante, on peut procéder à un remplissage radial des corps roulants, comme par exemple décrit dans FR 2 749 624.

La mise en oeuvre de tels bouchons peut parfois induire des défauts dans un roulement. Notamment, il est utile que le bouchon subisse de manière fiable le même procédé de fabrication que le reste de la bague dont il fait partie, afin que, en fonctionnement, la présence d'un bouchon ne soit pas ressentie par le corps roulant. Ainsi, le bouchon fait face à deux problématiques opposées : il doit avoir une position définie très précisément, et ce tout au long du procédé de fabrication, et il doit être démontable/montable facilement pour permettre l'insertion des corps roulants.

Ci-après, un exposé de l'invention telle que caractérisée dans les revendications.

Selon un premier aspect, l'invention a pour objet un système de bouchage pour une bague de roulement comprenant un corps principal annulaire autour d'un axe de roulement, et comprenant une surface interne et une surface externe opposée à la surface interne, l'une des surfaces interne et externe étant une surface périphérique de roulement pour des corps roulants du roulement, le corps principal annulaire comprenant un trou traversant de révolution d'axe s'étendant entre les surfaces interne et externe, et présentant une surface périphérique autour de l'axe,
Le système de bouchage comprenant :
- un dispositif bouchant montable pour s'étendre dans le trou traversant de révolution, et comprenant une extrémité de pied plaçable au niveau de la surface de roulement du corps principal, une extrémité de tête plaçable au niveau de la surface opposée à la surface de roulement, lorsque le dispositif bouchant est monté dans le trou traversant de révolution, et une surface latérale de révolution autour d'un axe de bouchage s'étendant entre les extrémités de tête et de pied,
   une surface de roulement de l'extrémité de pied du dispositif bouchant étant, lorsque le dispositif bouchant s'étend dans une position prédéterminée, comprenant à la fois une orientation prédéterminée du dispositif bouchant autour de l'axe et une profondeur prédéterminée du dispositif bouchant selon l'axe, disposée continue avec la surface de roulement du corps principal et formant avec elle un chemin de roulement pour les corps roulants du roulement,
- un système de fixation du dispositif bouchant sur le corps principal, adapté, dans un état actif, pour fixer le dispositif bouchant au corps principal dans une position relative définie dans laquelle le dispositif bouchant se trouve dans la position prédéterminée, le système de fixation pouvant être placé dans un état inactif dans lequel le dispositif bouchant peut être désassemblé du corps principal, ouvrant ainsi le trou traversant de révolution pour permettre de faire passer des corps roulants du roulement à travers le trou traversant de révolution,
le système de fixation comportant un moyen d'indexation en rotation de l'extrémité de pied du dispositif bouchant par rapport au corps principal autour de l'axe,
caractérisé en ce que le système de fixation comporte également un organe de maintien en profondeur sollicitant l'extrémité de tête du dispositif bouchant radialement par rapport à l'axe transversal, pour le placer en contact serré avec la surface périphérique du trou traversant au niveau de l'extrémité de tête,
l'extrémité de pied du dispositif bouchant comprend une première butée associée à une deuxième butée du trou traversant de révolution définissant une profondeur maximale de l'extrémité de pied du dispositif bouchant, et dans lequel le système de fixation est adapté pour fixer le dispositif bouchant au corps principal dans une position relative définie dans laquelle la première butée et la deuxième butée sont en appui l'une sur l'autre.

Grâce à ces dispositions, d'une part le dispositif bouchant est bien maintenu tout au long du processus de fabrication, et d'autre part un montage très précis reste possible.

Selon une réalisation, le moyen d'indexation en rotation comprend un trou au moins partiellement cylindrique ménagé dans l'extrémité de tête du dispositif bouchant et s'étendant selon un axe d'indexation normal à l'axe, adapté pour être aligné avec un trou cylindrique traversant ménagé dans le corps principal dans la position prédéterminée du dispositif bouchant, et une tige s'étendant dans et coopérant avec le trou au moins partiellement cylindrique, et s'étendant hors de celui-ci pour coopérer avec le trou cylindrique du corps principal.

Selon une réalisation, le système de fixation comprend un trou taraudé ménagé dans l'extrémité de tête du dispositif bouchant selon l'axe, et une vis formant l'organe de maintien en profondeur, et présentant un corps fileté vissé dans le trou taraudé et une tête plus large que le corps, la vis étant vissable dans le dispositif bouchant selon l'axe jusqu'à ce que la tête sollicite l'extrémité de tête du dispositif bouchant radialement par rapport à l'axe.

Selon une réalisation, la tête présente une surface de sollicitation inclinée par rapport à l'axe, et coopérant avec l'extrémité de tête du dispositif bouchant de sorte qu'un mouvement de la tête selon l'axe sollicite l'extrémité de tête du dispositif bouchant radialement par rapport à l'axe.

Selon une réalisation, le dispositif bouchant consiste en un bouchon, l'extrémité de tête du bouchon formant l'extrémité de tête du dispositif bouchant, et l'extrémité de tête du bouchon comprenant deux ailes disposées de part et d'autre d'un espace de réception, l'organe de maintien en profondeur étant placé dans l'espace de réception en sollicitant les deux ailes radialement par rapport à l'axe.

Selon une réalisation, le système de bouchage comprend un bouchon et une rondelle élastique fendue disposée autour de l'axe, disposée du côté opposé à la surface de roulement, en appui sur la face axiale d'appui du bouchon, l'extrémité de tête du bouchon comportant la face axiale d'appui et la rondelle élastique fendue formant ensemble l'extrémité de tête du dispositif bouchant.

Selon une réalisation, l'organe de maintien en profondeur maintient également fixement le bouchon et la rondelle élastique fendue ensemble.

Selon une réalisation, le trou taraudé est ménagé dans l'extrémité de tête du bouchon, et la tête de la vis sollicite la rondelle élastique fendue radialement par rapport à l'axe.

Selon une réalisation, le trou cylindrique ménagé dans l'extrémité de tête du dispositif bouchant est ménagé partiellement dans le bouchon et communique avec une fente de la rondelle élastique fendue.

Selon un autre aspect, l'invention se rapporte à une bague de roulement comprenant :
- un corps principal annulaire autour d'un axe de roulement, comprenant une surface interne et une surface externe opposée à la surface interne, l'une des surfaces interne et externe étant une surface périphérique de roulement pour des corps roulants du roulement, le corps principal annulaire comprenant un trou traversant de révolution d'axe s'étendant entre les surfaces interne et externe, et présentant une surface périphérique autour de l'axe,
- un système de bouchage, dans lequel:
   le dispositif bouchant est monté pour s'étendre dans le trou traversant de révolution, l'extrémité de pied placée au niveau de la surface de roulement du corps principal, l'extrémité de tête placée au niveau de la surface opposée à la surface de roulement, la surface de roulement de l'extrémité de pied du dispositif bouchant étant disposée continue avec la surface de roulement du corps principal et formant avec elle un chemin de roulement pour les corps roulants du roulement, le système de fixation du dispositif bouchant sur le corps principal, fixant, dans son état actif le dispositif bouchant au corps principal dans une position relative définie dans laquelle le dispositif bouchant se trouve dans la position prédéterminée, l'organe de maintien en profondeur sollicitant l'extrémité de tête du dispositif bouchant radialement par rapport à l'axe pour le placer en contact serré avec la surface périphérique du trou traversant au niveau de l'extrémité de tête.

Selon une réalisation, le corps principal annulaire comprend en outre un trou cylindrique d'indexation aligné avec l'axe d'indexation du dispositif bouchant, la tige s'étendant dans et coopérant avec le trou au moins partiellement cylindrique et le trou cylindrique d'indexation du corps principal annulaire.

Selon un autre aspect, l'invention se rapporte à un roulement comprenant au moins une bague intérieure, une bague extérieure, et des corps roulants disposés entre les bagues intérieures et extérieures, et adaptés pour rouler sur une surface de roulement de chacune des bagues intérieure et extérieure.

Selon un autre aspect, l'invention se rapporte à un procédé de fabrication d'un roulement, comprenant :
- on fournit un corps principal annulaire autour d'un axe de roulement, comprenant une surface interne et une surface externe opposée à la surface interne, l'une des surfaces interne et externe comprenant une ébauche de surface de roulement pour des corps roulants du roulement, le corps principal annulaire comprenant un trou traversant de révolution d'axe s'étendant entre les surfaces interne et externe, et présentant une surface périphérique autour de l'axe,
- on fournit un système de bouchage comprenant
   un dispositif bouchant comprenant une extrémité de pied, une extrémité de tête et une surface latérale de révolution autour d'un axe de bouchage s'étendant entre les extrémités de tête et de pied, le système de bouchage comprenant en outre un système de fixation du dispositif bouchant sur le corps principal,
- on monte le dispositif bouchant dans le trou traversant de révolution,
- avec le système de fixation, on fixe le dispositif bouchant dans une position prédéterminée, comprenant à la fois une orientation prédéterminée du dispositif bouchant autour de l'axe et une profondeur prédéterminée du dispositif bouchant selon l'axe, dans le trou traversant de révolution, l'extrémité de pied au niveau de l'ébauche de surface de roulement du corps principal, l'extrémité de tête au niveau de la surface opposée à l'ébauche de surface de roulement,
   la fixation comprenant l'indexation en rotation de l'extrémité de pied du dispositif bouchant par rapport au corps principal autour de l'axe, et le maintien en profondeur en sollicitant l'extrémité de tête du dispositif bouchant radialement par rapport à l'axe, en contact serré avec la surface périphérique du trou traversant au niveau de l'extrémité de tête,
- on meule l'ébauche de surface de roulement et l'extrémité de pied du dispositif bouchant sans déplacement du dispositif bouchant selon l'axe par rapport au corps principal annulaire, pour générer une surface de roulement de l'extrémité de pied du dispositif bouchant et une surface de roulement du corps principal continues l'une avec l'autre et formant ensemble un chemin de roulement pour les corps roulants du roulement,
- on traite thermiquement la surface de roulement et l'extrémité de pied du dispositif bouchant pour initier la transformation martensitique de l'acier,
- on rectifie la surface de roulement et l'extrémité de pied du dispositif bouchant,
- on place le système de fixation dans son état inactif, et on désassemble le dispositif bouchant du corps principal annulaire,
- on assemble le corps principal annulaire à une autre bague avec interposition d'un espace de roulement,
- on introduit des corps roulants dans l'espace de roulement à travers le trou traversant de révolution,
- on monte à nouveau le dispositif bouchant dans le trou traversant de révolution, et
- avec ledit système de fixation, on fixe le dispositif bouchant dans la position prédéterminée.

On décrit maintenant brièvement les figures des dessins.
La figure 1 correspond à une vue en perspective schématique en écorché d'un roulement selon un mode de réalisation.
La figure 2 est une vue en perspective schématique d'un bouchon équipant le roulement de la figure 1 selon un premier mode de réalisation.
La figure 3 est une vue en perspective en éclaté d'un dispositif bouchant utilisant le bouchon de la figure 2.
La figure 4 est une vue en coupe transversale selon la ligne IV-IV de la figure 3.
La figure 5 est une vue en coupe selon le même plan que la figure 4 en position montée pour le premier mode de réalisation.
La figure 6 est une vue en perspective du deuxième mode de réalisation.
La figure 7 est une vue similaire à la figure 5 pour le deuxième mode de réalisation.
La figure 8 est une vue similaire à la figure 5 pour un troisième mode de réalisation.

Ci-après un exposé détaillé de plusieurs modes de réalisation de l'invention assorti d'exemples et de référence aux dessins.

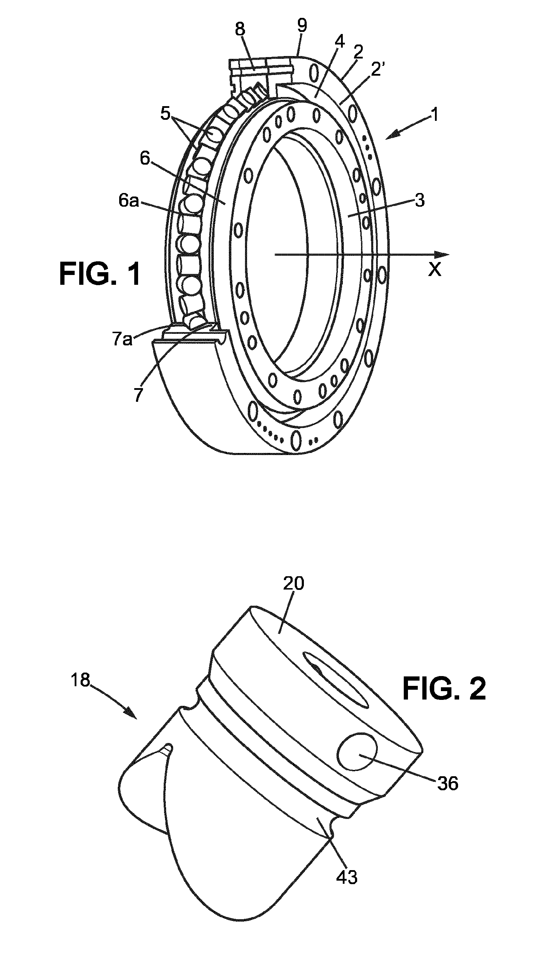

La présente invention se rapporte aux roulements. Un exemple de tel roulement 1 est représenté sur la figure 1. Sur la figure 1, le roulement 1 est représenté avec sa bague extérieure 2 en écorché, afin de favoriser la compréhension de l'invention. Un tel roulement 1 comporte classiquement une bague intérieure 3 annulaire autour d'un axe X. Un tel roulement 1 comprend également une bague extérieure 2 disposée concentrique avec la bague intérieure 3 autour de l'axe X. Un espace de roulement 4 est ménagé entre les bagues intérieure 3 et extérieure 2. L'espace de roulement 4 accueille des corps roulants 5.

Le roulement 1 est destiné à être utilisé dans un système tournant comprenant par exemple un arbre sur lequel est montée serrée la bague intérieure 3, et un logement auquel est assemblé la bague extérieure 2. Ainsi, le roulement 1 est utilisé pour faciliter un mouvement de rotation respective de l'arbre et du logement autour de l'axe X.

Comme cela est visible, notamment sur la figure 1, la bague intérieure 3 comprend une surface annulaire périphérique extérieure 6 faisant face à une surface annulaire périphérique intérieure 7 de la bague extérieure 2. Les surfaces annulaires périphériques extérieure 6 et intérieure 7 définissent entre elles l'espace de roulement 4. Chacune des surfaces annulaires périphériques extérieure 6 et intérieure 7 comprend une surface de roulement 6a, 7a, respectivement, qui est la partie de la surface annulaire périphérique respective qui est effectivement au contact des corps roulants 5 lors de l'utilisation du roulement.

À titre d'exemple purement illustratif, on a représenté ici un agencement particulier de corps roulants 5. Les corps roulants 5 sont tous des rouleaux cylindriques identiques, présentant chacun une surface cylindrique entre deux faces planes d'extrémité. Par ailleurs, ils ont chacun une longueur égale à son diamètre. Les corps roulants 5 sont disposés de manière alternée, selon deux configurations respectives distinctes. Selon une première configuration, la surface cylindrique du corps roulant 5 roule sur une première partie de chemin de roulement, alors qu'une face plane d'extrémité du corps roulant 5 glisse en tournant sur une deuxième partie du chemin de roulement de la même bague. Selon la deuxième configuration, la surface cylindrique du corps roulant 5 roule sur la deuxième partie du chemin de roulement, alors qu'une face plane d'extrémité du corps roulant 5 glisse en tournant sur la première partie du chemin de roulement. Ainsi, deux corps roulants 5 successifs sont disposés en formant un angle de 90° l'un avec l'autre le long du chemin de roulement de la même bague. Les corps roulants 5 ainsi disposés peuvent être placés avec une très grande concentration le long du chemin de roulement et être maintenus dans le roulement par eux-mêmes sans nécessiter de cage. Les corps roulants 5 peuvent être en contact ponctuel deux à deux au niveau de leur surface cylindrique respective adjacente deux à deux.

Les corps roulants 5 sont installés dans l'espace de roulement 4 par l'intermédiaire d'un trou traversant 8 ménagé dans une des bagues. Pour fixer les idées, dans la suite de la description, on considérera le trou traversant 8 ménagé dans la bague extérieure 2. Ainsi, la bague extérieure 2 comprend un corps annulaire 2' dans lequel est ménagé le trou traversant 8. Toutefois, le trou traversant pourrait en alternative être ménagé dans la bague intérieure 3. Le trou traversant 8 s'étend de la surface annulaire périphérique intérieure 7 de la bague extérieure 2 à la surface extérieure opposée 9 de la bague extérieure 2. On notera que, en variante, la surface opposée 9 pourra prendre toute géométrie adaptée à l'utilisation souhaitée. Dans l'exemple présenté, le trou traversant 8 s'étend selon une direction depuis l'axe X du roulement et orthogonalement à celui-ci. Toutefois, selon les modes de réalisation, il pourrait en être autrement.

Dans ce qui suit, le terme « axial » sera utilisé pour désigner ce qui s'étend selon l'axe Y du trou traversant 8. Le terme « radial » sera utilisé pour désigner ce qui s'étend de manière orthogonale à l'axe Y et depuis l'axe Y.

Le trou traversant 8 comporte une géométrie permettant de faire passer des corps roulants 5 à travers celui-ci depuis l'extérieur du roulement jusqu'à l'espace de roulement 4. Selon la disposition et la forme des corps roulants 5, la forme du trou traversant 8 pourra être choisie. On choisit par exemple un trou traversant de révolution.

Un système de bouchage est utilisé pour boucher le trou traversant 8. Lorsqu'il est bouché par le système de bouchage, le trou traversant 8 ne peut pas laisser passer de corps roulants 5 à travers lui entre l'espace de roulement 4 et l'extérieur, dans un sens comme dans l'autre. Lorsque le système de bouchage est absent, les corps roulants 5 peuvent passer à travers le trou traversant 8 entre l'espace de roulement 4 et l'extérieur, dans un sens comme dans l'autre.

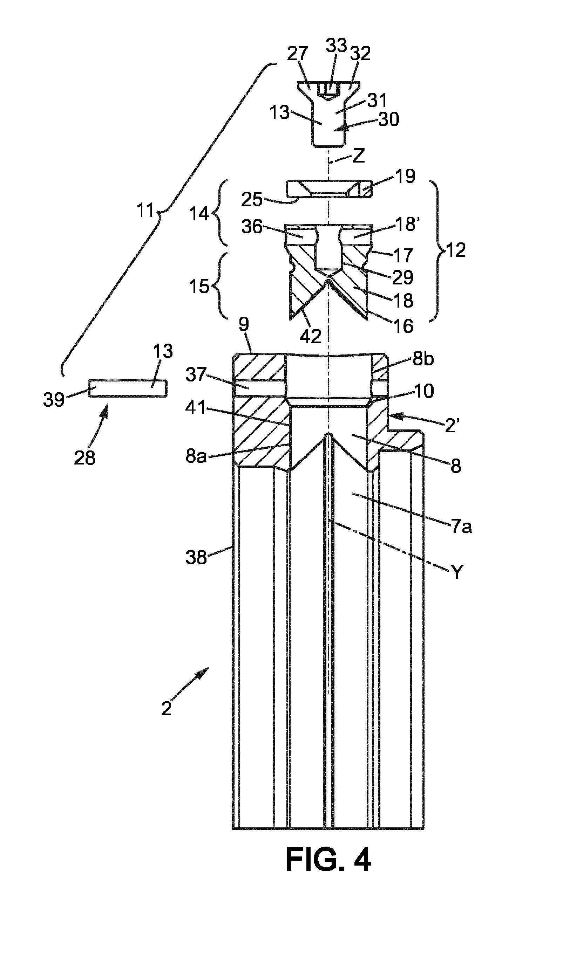

Les figures 2 à 4 donnent un premier exemple d'un système de bouchage selon l'invention. Cette description est donnée en considérant un bouchage de la bague extérieure 2. Elle devra être adaptée en conséquence pour un bouchage de la bague intérieure 3. Ainsi, ce qui est « intérieur » désigne ce qui est proche du chemin de roulement, et ce qui est « extérieur » désigne ce qui en est éloigné. Pour commencer, en relation avec la figure 4, on pourra remarquer que le trou traversant 8 comporte deux portions 8a et 8b concentriques d'axe l'axe Y du trou traversant 8, disposées, pour une première portion 8a, à proximité de la surface de roulement 7a et, pour la deuxième portion 8b éloignée de la surface de roulement 7a. La deuxième portion 8b comporte une dimension supérieure à celle de la dimension de la première portion 8a. Par dimension, on considère ici une dimension dans un plan normal à l'axe transversal Y du trou traversant 8. Par conséquent, le trou traversant 8 est muni d'un épaulement 10 formant une butée à la jonction des deux portions 8a et 8b.

Le système de bouchage 11 comprend deux parties principales : un dispositif bouchant 12 et un système de fixation 13. Le dispositif bouchant 12 présente une géométrie qui lui permette de s'étendre dans le trou traversant 8. Ainsi, il s'étend le long d'un axe de bouchage Z qui est confondu avec l'axe Y du trou traversant 8 quand le dispositif bouchant 12 est monté dans le trou traversant 8. Le dispositif bouchant 12 comporte une extrémité de tête 14 et une extrémité de pied 15 opposées réparties le long de l'axe Z. La surface périphérique latérale 16 du dispositif bouchant 12 est complémentaire de la surface périphérique du trou traversant 8, de sorte que le dispositif bouchant 12 peut s'étendre dans le trou traversant 8 avec son extrémité de tête 14 au niveau de la surface extérieure 9 de la bague extérieure 2, et son extrémité de pied 15 au niveau de la surface de roulement 7a de la bague extérieure 2. En particulier, la surface périphérique latérale 16 peut comporter un rétrécissement 17 coopérant avec l'épaulement 10 du trou traversant 8 pour définir une profondeur maximale à laquelle s'étend le dispositif bouchant 12 dans le trou traversant 8.

Comme cela est visible notamment sur la figure 4, le dispositif bouchant 12 est réalisé en deux pièces distinctes. Les deux pièces sont décalées l'une par rapport à l'autre selon l'axe Z : ainsi, le dispositif bouchant 12 comporte un bouchon 18 et une rondelle élastique 19. Le bouchon 18 comprend l'extrémité de pied 15 du dispositif bouchant 12. L'extrémité de tête 14 du dispositif bouchant 12 est répartie à la fois comme l'extrémité de tête du bouchon 18' sur le bouchon 18, et sur la rondelle élastique 19. Ainsi, le bouchon 18 comprend l'extrémité de pied 15 du dispositif bouchant, le rétrécissement 17, et une partie axialement intérieure de l'extrémité de tête 14 du dispositif bouchant.

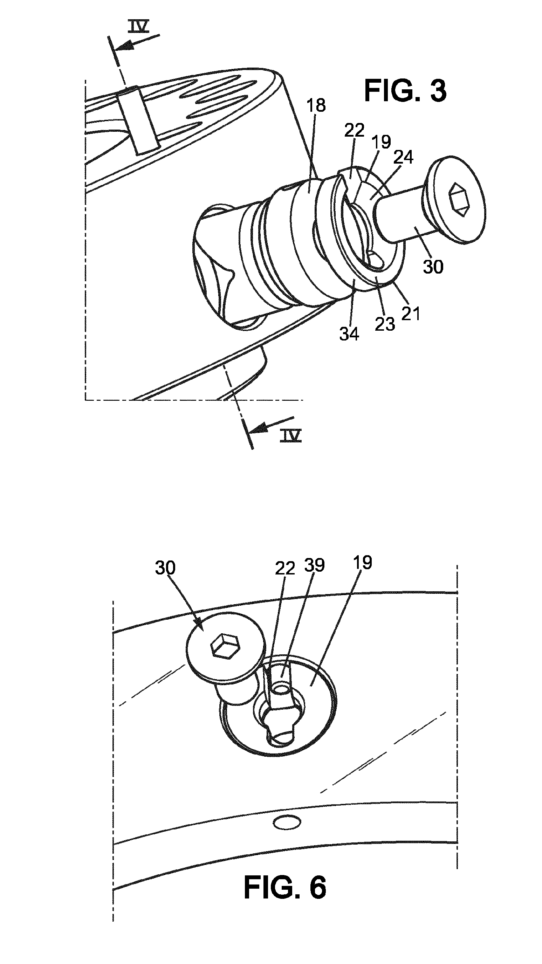

Le bouchon 18 comprend une face axialement extérieure d'appui 20, sensiblement plane, recevant la rondelle élastique 19. La rondelle élastique 19 est visible notamment sur la figure 3. Elle comprend un corps annulaire 21 doté d'une fente 22. La fente 22 permet une déformation sensiblement radiale du corps annulaire 21, radialement par rapport à l'axe Z. Par ailleurs, le corps annulaire 21 comprend une face axialement extérieure 23 comprenant une portion inclinée 24 en biais s'étendant à la fois vers l'axe Z et vers l'axe Y. Le corps annulaire 21 comprend une face axialement intérieure 25 orientée vers la face radialement extérieure d'appui 20 du bouchon 18, et par conséquent opposée à la face axialement extérieure 23. Le dispositif bouchant 12 comprend une face radialement extérieure 34.

Le système de bouchage comprend également un système de fixation 13 du dispositif bouchant 12. Le système de fixation 13 comprend d'une part un organe de maintien en profondeur 27 et, d'autre part, un système d'indexation en rotation 28 de l'extrémité de pied du dispositif bouchant par rapport à l'axe Y. Pour le maintien en profondeur, on prévoit un dispositif permettant de pousser le dispositif bouchant 12 avec le rétrécissement 17 en appui sur l'épaulement 10 ménagé dans la bague extérieure 2. À cet effet, on prévoit un trou taraudé 29 ménagé dans la portion axialement extérieure du bouchon 18, d'axe Z, et débouchant au niveau de la face axialement extérieure d'appui 20 du bouchon 18. Par ailleurs, on prévoit une vis 30 présentant un corps fileté 31 orienté selon l'axe Z. Le filetage du corps fileté 31 est complémentaire de celui du trou taraudé 29. La vis 30 comporte également une tête de vis 32 présentant une empreinte 33 pour la réception d'un outil de vissage adapté pour impartir à la vis un mouvement de rotation autour de l'axe Z. La tête de vis 32 comprend également une forme en tronc de cône élargi radialement vers l'extérieur présentant une surface de sollicitation 32' ayant une forme complémentaire de la portion inclinée 24 de la rondelle élastique 19.

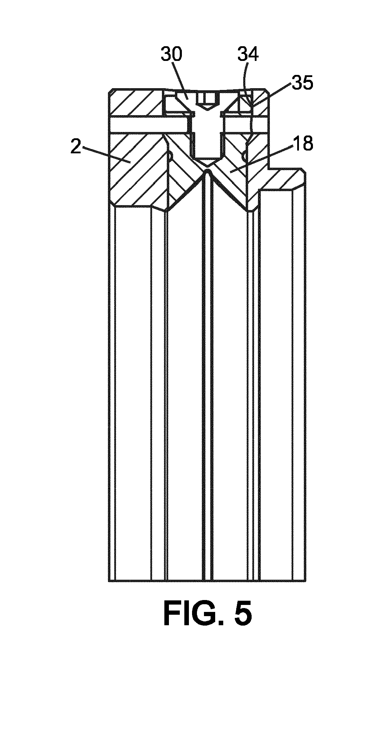

Ainsi, comme représenté sur la figure 5, lorsque la vis 30 est dans le bouchon 18, la forme en tronc de cône de la tête de vis 32 coopère avec la portion inclinée 24 de la rondelle élastique 19 pour déformer la rondelle élastique 19 radialement vers l'extérieur par rapport à l'axe Z, de manière à faire coopérer la face radicalement externe 34 de la rondelle élastique avec la face opposée 35 du trou traversant de la bague extérieure 2.

Par ailleurs, au cours du vissage, la vis 30 pousse la rondelle élastique 19 selon l'axe transversal jusqu'à ce que la face axialement intérieure 25 appuie sur la face axialement extérieure d'appui 20 du bouchon 18.

Ainsi, dans la position représentée sur la figure 5, le bouchon 18 ne peut pas se déplacer axialement selon l'axe Y vers le centre de la bague par appui sur l'épaulement 10 de la bague extérieure 2. Le bouchon 18 ne peut pas se déplacer axialement selon l'axe Y vers l'extérieur par appui sur la rondelle élastique 19. La rondelle élastique 19 est elle-même maintenue par friction sur la paroi opposée 35 de la bague extérieure 2, imposée par le serrage de la vis 30. Le dispositif bouchant 12 est disposé en une profondeur déterminée selon l'axe Y.

Le trou traversant 8 présentant une surface extérieure de révolution 41 le long de l'axe Z, on prévoit un moyen d'indexation en rotation de l'extrémité de pied du dispositif bouchant par rapport à la bague extérieure 2 autour de l'axe Y. A ce titre, le bouchon 18 comporte un trou traversant radial 36 s'étendant dans la portion axialement externe du bouchon 18. Par ailleurs, la bague extérieure 2 comporte un trou 37 qui s'étend selon l'axe du roulement X, s'étendant depuis une face d'extrémité 38 de la bague extérieure 2, et débouchant dans le trou traversant 8.

Lorsque le dispositif bouchant 12 est disposé selon l'orientation prédéterminée par rapport à l'axe Z, son trou traversant radial 36 s'étend parallèlement au trou 37 qui s'étend selon l'axe du roulement X de la bague extérieure 2. Quand, par ailleurs, le dispositif bouchant 12 s'étend à la profondeur prédéterminée, et que le trou 37 qui s'étend selon l'axe du roulement X de la bague extérieure 2 est aligné avec le trou traversant radial 36, une goupille 39 peut être disposée s'étendant à la fois dans le trou 37 qui s'étend selon l'axe du roulement X de la bague extérieure 2 et dans le trou traversant radial 36 du dispositif bouchant 12, afin de définir l'orientation du dispositif bouchant 12, notamment de son extrémité de pied 18, par rapport à l'axe Y.

Dans une position prédéterminée du dispositif bouchant 12, comprenant à la fois une profondeur prédéterminée définie par l'épaulement 10, et une orientation prédéterminée définie par la goupille 39, une surface de roulement de l'extrémité de pied du dispositif bouchant 12 est disposée continue avec la surface de roulement 7a de la bague extérieure 2, et forme avec elle un chemin de roulement pour les corps roulants 5 du roulement.

Si le dispositif bouchant 12 n'est pas dans la position prédéterminée, par exemple en n'étant pas à la profondeur prédéterminée, il en résulte une marche à franchir pour le corps roulant. Si le dispositif bouchant 12 n'est pas dans l'orientation prédéterminée, la surface de roulement de l'extrémité de pied du dispositif bouchant 12 n'est pas parfaitement alignée avec celle de la bague extérieure 2. Il en résulte, dans un cas comme dans l'autre, un défaut pouvant entraîner une défaillance du roulement.

Le système de fixation peut prendre un état actif, qui est celui représenté sur la figure 5, dans lequel le trou traversant 8 est bouché par le dispositif bouchant 12. Alternativement, le système de fixation peut prendre un état inactif, en retirant la goupille 39, et en dévissant la vis 30, dans lequel le dispositif bouchant 12 peut être retiré du trou traversant 8, et dans lequel des corps roulants peuvent passer à travers le trou traversant 8 de la bague extérieure 2.

Le bouchon 18 peut comporter une gorge 43 servant de siège à un joint d'étanchéité (non représenté). La gorge 43 est par exemple réalisée annulaire autour de l'axe Z, et est disposée plus proche du centre du roulement que le rétrécissement 17.

Le produit qui vient d'être décrit peut être fabriqué par la suite d'opérations suivantes :
- On fournit un corps principal annulaire 2' autour d'un axe de roulement, comprenant une surface périphérique interne 7 et une surface périphérique externe 9 opposée à la surface périphérique interne 7, la surface périphérique interne comprenant une ébauche de surface de roulement pour des corps roulants du roulement, le corps principal annulaire 2' comprenant un trou traversant 8 de révolution d'axe Y s'étendant entre les surfaces périphériques interne 7 et externe 9, et présentant une surface périphérique 41 autour de l'axe Y,
- On fournit un système de bouchage comprenant un dispositif bouchant 12 comprenant une extrémité de pied 15, une extrémité de tête 14 et une surface latérale de révolution 16 autour d'un axe de bouchage Z s'étendant entre les extrémités de tête 14 et de pied 15, le système de bouchage comprenant en outre un système de fixation 13 du dispositif bouchant 12 sur le corps principal 2',
- On monte le dispositif bouchant 12 dans le trou traversant de révolution 8,
- Avec le système de fixation 13, on fixe le dispositif bouchant 12 dans une position prédéterminée, comprenant à la fois une orientation prédéterminée du dispositif bouchant autour de l'axe Y et une profondeur prédéterminée du dispositif bouchant 12 selon l'axe Y, dans le trou traversant 8 de révolution, l'extrémité de pied 15 au niveau de la surface de roulement du corps principal 2', l'extrémité de tête 14 au niveau de la surface opposée à la surface de roulement,
   la fixation comprenant l'indexation en rotation de l'extrémité de pied 15 du dispositif bouchant 12 par rapport au corps principal 2' autour de l'axe Y, et le maintien en profondeur en sollicitant l'extrémité de tête 14 du dispositif bouchant 12 radialement par rapport à l'axe transversal Y, en contact serré avec la surface périphérique 41 du trou traversant 8 au niveau de l'extrémité de tête 14,
- on meule l'ébauche de surface de roulement et l'extrémité de pied 15 du dispositif bouchant 12 sans déplacement axial du dispositif bouchant par rapport au corps principal annulaire ni déformation de la tige 39, pour générer une surface de roulement 42 de l'extrémité de pied 15 du dispositif bouchant 12 et une surface de roulement 7a du corps principal 2' continues l'une avec l'autre et formant ensemble un chemin de roulement pour les corps roulants du roulement,
- on traite thermiquement l'ébauche de surface de roulement et l'extrémité de pied 15 du dispositif bouchant 12 pour initier la transformation martensitique de l'acier (par exemple en traitant thermiquement l'ensemble du système),
- on rectifie les surfaces de roulement 42 et7a,
- on place le système de fixation 13 dans son état inactif, et on désassemble le dispositif bouchant 12 du corps principal annulaire 2',
- on assemble le corps principal annulaire 2' à une autre bague, ici une bague intérieure 3, avec interposition d'un espace de roulement 4,
- on introduit des corps roulants 5 dans l'espace de roulement 4 à travers le trou traversant de révolution 8,
- on monte à nouveau le dispositif bouchant 12 dans le trou traversant de révolution 8, et
- avec ledit système de fixation 13, on fixe le dispositif bouchant 12 dans la position prédéterminée.

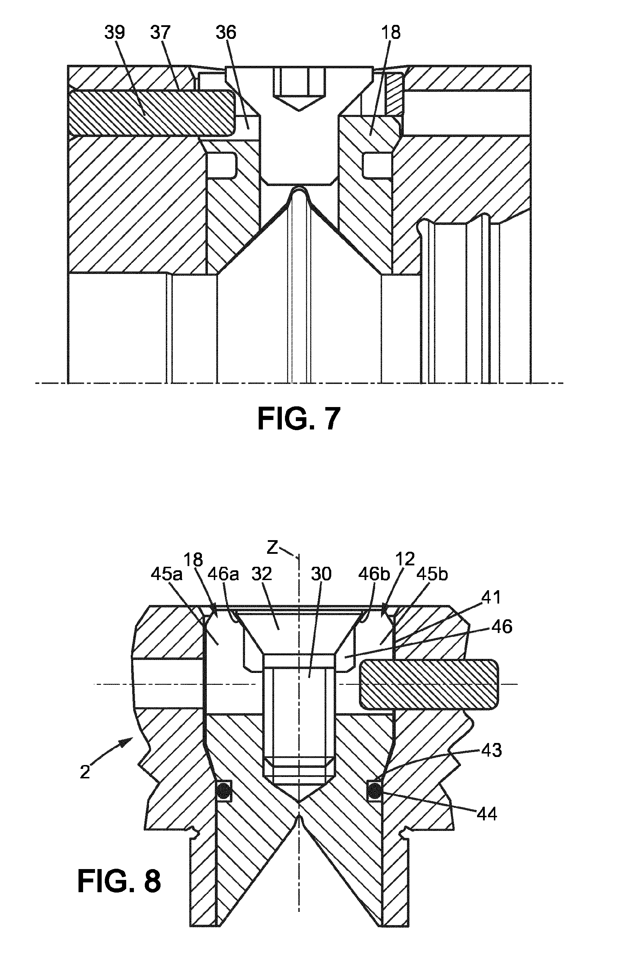

On décrit maintenant un deuxième mode de réalisation de l'invention, notamment par référence aux figures 6 et 7. Ce deuxième mode de réalisation est similaire au premier mode de réalisation, et les éléments communs entre ces deux modes de réalisation ne seront pas décrits à nouveau. Principalement, une différence entre ces deux modes de réalisation tient dans le fait que la hauteur du bouchon 18 selon l'axe Z est inférieure dans ce deuxième mode de réalisation. Ainsi, le bouchon 18 ne peut pas à lui seul être le siège de la goupille 39. En d'autres termes, le trou 37 qui s'étend selon l'axe du roulement X ne peut pas être ménagé uniquement dans le bouchon 18. Ainsi, dans ce deuxième mode de réalisation, le trou 37 qui s'étend selon l'axe du roulement X est débouchant transversalement, et débouche dans la fente 22 de la rondelle élastique 19. Ainsi, la fente 22 de la rondelle élastique 19 et le trou traversant 37 du bouchon 18 sont alignés respectivement l'un avec l'autre par rapport à l'axe Z.

La figure 8 présente maintenant un troisième mode de réalisation de l'invention. La figure 8 est similaire au mode de réalisation précédemment décrit, et les éléments communs ne seront pas décrits à nouveau. Sur la figure 8, le joint d'étanchéité 44 ménagé dans la gorge 43 est représenté. Ce mode de réalisation diffère sensiblement du premier mode de réalisation en ce que le dispositif bouchant 12 est réalisé en une seule pièce. Ainsi, contrairement au premier mode de réalisation qui utilise une rondelle élastique 19 associée mécaniquement au bouchon 18 par frottement, la déformation radiale est générée directement dans le bouchon 18, dans ce mode de réalisation.

Ainsi, dans ce mode de réalisation, l'extrémité de tête 14 du bouchon comprend deux ailes 45a, 45b espacées l'une de l'autre par rapport à l'axe Z, espacés l'une de l'autre par un espace de réception 46, et déformables élastiquement selon une direction radiale par rapport à l'axe Z pour venir en appui sur la surface périphérique 41 de la bague extérieure 2. Chacune des ailes 45a et 45b comporte une portion de surface inclinée 46a, 46b, respectivement, coopérant avec la tête de vis 32, de sorte qu'un mouvement de la vis 30 selon l'axe Z provoque une déformation élastique des ailes 45a et 45b radialement vers l'extérieur par rapport à l'axe Z.

## Revendications

1. Système de bouchage pour une bague de roulement comprenant un corps principal annulaire (2') autour d'un axe de roulement (X), et comprenant une surface interne (7) et une surface externe (9) opposée à la surface interne (7), l'une des surfaces interne (7) et externe (9) étant une surface périphérique de roulement (7a) pour des corps roulants (5) du roulement, le corps principal annulaire (2') comprenant un trou traversant (8) de révolution d'axe (Y) s'étendant entre les surfaces interne (7) et externe (9), et présentant une surface périphérique (41) autour de l'axe (Y),
Le système de bouchage comprenant :
- un dispositif bouchant (12) montable pour s'étendre dans le trou traversant (8) de révolution, et comprenant une extrémité de pied (15) plaçable au niveau de la surface de roulement du corps principal (2'), une extrémité de tête (14) plaçable au niveau de la surface (9) opposée à la surface de roulement (7a), lorsque le dispositif bouchant (12) est monté dans le trou traversant (8) de révolution, et une surface latérale (16) de révolution autour d'un axe de bouchage (Z) s'étendant entre les extrémités de tête (14) et de pied (15),
une surface de roulement (42) de l'extrémité de pied (15) du dispositif bouchant (12) étant, lorsque le dispositif bouchant (12) s'étend dans une position prédéterminée, comprenant à la fois une orientation prédéterminée du dispositif bouchant (12) autour de l'axe (Y) et une profondeur prédéterminée du dispositif bouchant (12) selon l'axe (Y), disposée continue avec la surface de roulement (7a) du corps principal (2') et formant avec elle un chemin de roulement pour les corps roulants (5) du roulement,
- un système de fixation (13) du dispositif bouchant (12) sur le corps principal (2'), adapté, dans un état actif, pour fixer le dispositif bouchant (12) au corps principal (2') dans une position relative définie dans laquelle le dispositif bouchant (12) se trouve dans la position prédéterminée, le système de fixation (13) pouvant être placé dans un état inactif dans lequel le dispositif bouchant (12) peut être désassemblé du corps principal (2'), ouvrant ainsi le trou traversant (8) de révolution pour permettre de faire passer des corps roulants (5) du roulement à travers le trou traversant (8) de révolution,
le système de fixation (13) comportant un moyen d'indexation en rotation (28) de l'extrémité de pied (15) du dispositif bouchant (12) par rapport au corps principal (2') autour de l'axe (Y),
le système de fixation (13) comporte également un organe de maintien en profondeur (27) sollicitant l'extrémité de tête (14) du dispositif bouchant (12) radialement par rapport à l'axe transversal (Y), pour le placer en contact serré avec la surface périphérique (41) du trou traversant (8) au niveau de l'extrémité de tête (14),
**caractérisé en ce que** l'extrémité de pied (15) du dispositif bouchant (12) comprend une première butée (17) associée à une deuxième butée (10) du trou traversant (8) de révolution définissant une profondeur maximale de l'extrémité de pied (15) du dispositif bouchant (12), et dans lequel le système de fixation (13) est adapté pour fixer le dispositif bouchant (12) au corps principal (2') dans une position relative définie dans laquelle la première butée (17) et la deuxième butée (10) sont en appui l'une sur l'autre.

2. Système de bouchage selon la revendication 1, dans laquelle le moyen d'indexation en rotation (28) comprend un trou (36) au moins partiellement cylindrique ménagé dans l'extrémité de tête (14) du dispositif bouchant (12) et s'étendant selon un axe d'indexation normal à l'axe (Y), adapté pour être aligné avec un trou cylindrique (37) traversant ménagé dans le corps principal (2') dans la position prédéterminée du dispositif bouchant (12), et une tige (39) s'étendant dans et coopérant avec le trou (36) au moins partiellement cylindrique, et s'étendant hors de celui-ci pour coopérer avec le trou cylindrique (37) du corps principal (2').

3. Système de bouchage selon l'une des revendications 1 à 2, dans lequel le système de fixation (13) comprend un trou taraudé (29) ménagé dans l'extrémité de tête (14) du dispositif bouchant (12) selon l'axe (Y), et une vis (30) formant l'organe de maintien en profondeur (27), et présentant un corps fileté (31) vissé dans le trou taraudé (29) et une tête (32) plus large que le corps (31), la vis (30) étant vissable dans le dispositif bouchant (12) selon l'axe (Y) jusqu'à ce que la tête (32) sollicite l'extrémité de tête (14) du dispositif bouchant (12) radialement par rapport à l'axe (Y).

4. Système de bouchage selon la revendication 3, dans lequel la tête (32) présente une surface de sollicitation (32') inclinée par rapport à l'axe (Y), et coopérant avec l'extrémité de tête (14) du dispositif bouchant (12) de sorte qu'un mouvement de la tête (32) selon l'axe (Y) sollicite l'extrémité de tête (14) du dispositif bouchant (12) radialement par rapport à l'axe (Y).

5. Système de bouchage selon l'une des revendications 1 à 4, dans lequel le dispositif bouchant (12) consiste en un bouchon (18), l'extrémité de tête du bouchon formant l'extrémité de tête (14) du dispositif bouchant (12), et l'extrémité de tête du bouchon comprenant deux ailes (45a, 45b) disposées de part et d'autre d'un espace de réception (46), l'organe de maintien en profondeur (27) étant placé dans l'espace de réception (46) en sollicitant les deux ailes (46a, 46b) radialement par rapport à l'axe (Y).

6. Système de bouchage selon l'une des revendications 1 à 4, dans lequel le système de bouchage comprend un bouchon (18) et une rondelle élastique (19) fendue disposée autour de l'axe (Y), disposée du côté opposé à la surface de roulement (7a), en appui sur la face axiale d'appui (20) du bouchon (18), l'extrémité de tête du bouchon comportant la face axiale d'appui (20) et la rondelle élastique(19) fendue formant ensemble l'extrémité de tête (14) du dispositif bouchant (12).

7. Système de bouchage selon la revendication 6, dans lequel l'organe de maintien en profondeur (27) maintient également fixement le bouchon (18) et la rondelle élastique (19) fendue ensemble.

8. Système de bouchage selon la revendication 6 ou 7, et selon la revendication 3 ou 4, dans lequel le trou taraudé (29) est ménagé dans l'extrémité de tête du bouchon (18), et la tête de la vis (32) sollicite la rondelle élastique (19) fendue radialement par rapport à l'axe (Y).

9. Système de bouchage selon l'une quelconque des revendications 6 à 8, et selon l'une quelconque des revendications 2 à 4, dans lequel le trou cylindrique (36) ménagé dans l'extrémité de tête du dispositif bouchant (12) est ménagé partiellement dans le bouchon (18) et communique avec une fente (22) de la rondelle élastique (19) fendue.

10. Bague de roulement comprenant:
- un corps principal annulaire (2') autour d'un axe de roulement (X), comprenant une surface interne (7) et une surface externe (9) opposée à la surface interne (7), l'une des surfaces interne (7) et externe (9) étant une surface périphérique de roulement (7a) pour des corps roulants (5) du roulement, le corps principal (2') annulaire comprenant un trou traversant (8) de révolution d'axe (Y) s'étendant entre les surfaces interne (7) et externe (9), et présentant une surface périphérique (41) autour de l'axe (Y),
- un système de bouchage (11) selon l'une quelconque des revendications 1 à 9, dans lequel:
l e dispositif bouchant (12) est monté pour s'étendre dans le trou traversant (18) de révolution, l'extrémité de pied (15) placée au niveau de la surface de roulement (7a) du corps principal (2'), l'extrémité de tête (14) placée au niveau de la surface (9) opposée à la surface de roulement (7a), la surface de roulement (42) de l'extrémité de pied (15) du dispositif bouchant (12) étant disposée continue avec la surface de roulement (7a) du corps principal (2') et formant avec elle un chemin de roulement pour les corps roulants (5) du roulement, le système de fixation (13) du dispositif bouchant (12) sur le corps principal (2'), fixant, dans son état actif le dispositif bouchant (12) au corps principal (2') dans une position relative définie dans laquelle le dispositif bouchant (12) se trouve dans la position prédéterminée, l'organe de maintien en profondeur (27) sollicitant l'extrémité de tête (14) du dispositif bouchant (12) radialement par rapport à l'axe (Y) pour le placer en contact serré avec la surface périphérique (41) du trou traversant (8) au niveau de l'extrémité de tête (14).

11. Bague selon la revendication 10, dans lequel le corps principal annulaire (2') comprend en outre un trou cylindrique d'indexation(37) aligné avec l'axe d'indexation du dispositif bouchant (12), la tige (39) s'étendant dans et coopérant avec le trou (36) au moins partiellement cylindrique et le trou cylindrique d'indexation (37) du corps principal annulaire (2').

12. Roulement comprenant au moins une bague intérieure (3), une bague extérieure (2), et des corps roulants (5) disposés entre les bagues intérieure (3) et extérieure (2), et adaptés pour rouler sur une surface de roulement (7a, 6a) de chacune des bagues intérieure (3) et extérieure (2), dans lequel l'une des bagues intérieure (3) et extérieure (2) est une bague selon l'une des revendications 10 ou 11.

13. Procédé de fabrication d'un roulement selon la revendication 12, comprenant :
- on fournit un corps principal annulaire (2') autour d'un axe de roulement, comprenant une surface interne (7) et une surface externe (9) opposée à la surface interne (7), l'une des surfaces interne (7) et externe (9) comprenant une ébauche de surface de roulement pour des corps roulants (5) du roulement, le corps principal annulaire (2') comprenant un trou traversant (8) de révolution d'axe (Y) s'étendant entre les surfaces interne (7) et externe (9), et présentant une surface périphérique (41) autour de l'axe (Y),
- on fournit un système de bouchage (11) comprenant
un dispositif bouchant (12) comprenant une extrémité de pied (15), une extrémité de tête (14) et une surface latérale de révolution autour d'un axe de bouchage (Z) s'étendant entre les extrémités de tête (14) et de pied (15), le système de bouchage (11) comprenant en outre un système de fixation (13) du dispositif bouchant (12) sur le corps principal (2'),
- on monte le dispositif bouchant (12) dans le trou traversant (8) de révolution,
- avec le système de fixation (13), on fixe le dispositif bouchant (12) dans une position prédéterminée, comprenant à la fois une orientation prédéterminée du dispositif bouchant (12) autour de l'axe (Y) et une profondeur prédéterminée du dispositif bouchant (12) selon l'axe (Y), dans le trou traversant (8) de révolution, l'extrémité de pied (15) au niveau de l'ébauche de surface de roulement du corps principal (2), l'extrémité de tête (14) au niveau de la surface opposée à l'ébauche de surface de roulement,
la fixation comprenant l'indexation en rotation de l'extrémité de pied (15) du dispositif bouchant (12) par rapport au corps principal (2') autour de l'axe (Y), et le maintien en profondeur en sollicitant l'extrémité de tête (14) du dispositif bouchant (12) radialement par rapport à l'axe (Y), en contact serré avec la surface périphérique (41) du trou traversant (8) au niveau de l'extrémité de tête (14),
- on meule l'ébauche de surface de roulement et l'extrémité de pied (15) du dispositif bouchant (12) sans déplacement du dispositif bouchant (12) selon l'axe (Y) par rapport au corps principal annulaire (2'), pour générer une surface de roulement de l'extrémité de pied (15) du dispositif bouchant (12) et une surface de roulement du corps principal continues l'une avec l'autre et formant ensemble un chemin de roulement pour les corps roulants (5) du roulement,
- on traite thermiquement la surface de roulement et l'extrémité de pied (15) du dispositif bouchant (12) pour initier la transformation martensitique de l'acier,
- on rectifie la surface de roulement et l'extrémité de pied (15) du dispositif bouchant (12),
- on place le système de fixation (11) dans son état inactif, et on désassemble le dispositif bouchant (12) du corps principal annulaire (2'),
- on assemble le corps principal annulaire (2') à une autre bague (3) avec interposition d'un espace de roulement (4),
- on introduit des corps roulants (5) dans l'espace de roulement (4) à travers le trou traversant (8) de révolution,
- on monte à nouveau le dispositif bouchant (12) dans le trou traversant (8) de révolution, et
- avec ledit système de fixation (11), on fixe le dispositif bouchant (12) dans la position prédéterminée.
